# EUROPÄISCHE PATENTANMELDUNG

(11) **EP 1 873 439 A2**
(43) Veröffentlichungstag der Anmeldung: **02.01.2008**
(21) Anmeldenummer: 07009650.8
(22) Anmeldetag: 15.05.2007
(51) Int. Cl.: F16L 37/12

(54) **Steckverbinder**

(30) Priorität: 29.06.2006 DE 102006030058
(71) Anmelder: NORMA Germany GmbH, 63277 Maintal (DE)
(72) Erfinder: Bahlke, Matthias, 63571 Gelnhausen (DE); Bahner, Frank, 63071 Offenbach/Main (DE); Bauer, Andreas, 63477 Maintal (DE); Strauss, Oliver, 61130 Nidderau (DE)
(74) Vertreter: Knoblauch, Andreas

(57) **Zusammenfassung**

Es wird ein Steckverbinder (1) angegeben mit einem Korpus (2) aus einem ersten Kunststoff, der einen Verbindungsstutzen (3) und mindestens eine Rastnase (4) aufweist, die an einem Halteelement (5) radial außerhalb des Verbindungsstutzens (3) und mit radialem Abstand zum Verbindungsstutzen (3) angeordnet ist.

Man möchte die Gebrauchseigenschaften eines derartigen Steckverbinders verbessern.

Hierzu ist vorgesehen, daß der Korpus (2) zumindest auf einem Teil seiner Oberfläche mit einem zweiten Kunststoff versehen ist.

## Beschreibung

Die Erfindung betrifft einen Steckverbinder mit einem Korpus aus einem ersten Kunststoff, der einen Verbindungsstutzen und mindestens eine Rastnase aufweist, die an einem Halteelement radial außerhalb des Verbindungsstutzens und mit radialem Abstand zum Verbindungsstutzen angeordnet ist.

Ein derartiger Steckverbinder ist als Teil einer Steckkupplung aus DE 37 27 858 C2 bekannt. Ein derartiger Steckverbinder ermöglicht es, eine Verbindung zwischen zwei Leitungen durch eine einfache translatorische Bewegung herzustellen. Dabei rastet die Rastnase hinter einen entsprechenden Vorsprung an dem mit dem Steckverbinder zusammenwirkenden Gegenstück ein. Zum Lösen der Verbindung wird die Rastnase nach außen gebogen, so daß das Gegenstück vom Steckverbinder freikommt. Ein derartiger Steckverbinder und eine damit zusammengesetzte Steckkupplung haben sich in vielen Anwendungen bewährt.

Der Erfindung liegt die Aufgabe zugrunde, die Gebrauchseigenschaften zu verbessern.

Diese Aufgabe wird bei einem Steckverbinder der eingangs genannten Art dadurch gelöst, daß der Korpus zumindest auf einem Teil seiner Oberfläche mit einem zweiten Kunststoff versehen ist.

Mit diesem zweiten Kunststoff kann man dort, wo es gewünscht ist, dem Steckverbinder andere Oberflächeneigenschaften mitgeben, die der erste Kunststoff nicht erzeugen kann. Damit ist es möglich, die Gebrauchseigenschaften des Steckverbinders zu verbessern.

So ist es beispielsweise von Vorteil, wenn der zweite Kunststoff weicher als der erste Kunststoff ist. In diesem Fall kann man den zweiten Kunststoff beispielsweise dort anordnen, wo eine Kompression eines Teils des Steckverbinders beim Zusammenfügen mit einem Gegenstück oder beim Anschließen eines Schlauchs oder einer Leitung erforderlich oder günstig ist.

Auch kann es vorteilhaft sein, wenn der zweite Kunststoff glatter als der erste Kunststoff ist. Dies bietet sich vor allem bei solchen Flächen an, bei denen beim Zusammenstecken der Einzelteile einer Steckkupplung Reibung auftritt. Je größer die Reibung ist, desto größer sind die Kräfte, die man beim Zusammenstecken anwenden muß. Wenn nun der zweite Kunststoff glatter als der erste Kunststoff ist, dann kann man die Reibungskräfte vermindern und damit auch die beim Zusammenstekken des Steckverbinders mit einem Gegenstück erforderlichen Kräfte.

Vorzugsweise sind der erste Kunststoff und der zweite Kunststoff aneinander angespritzt. Dies ist eine relativ einfache Möglichkeit, um zum einen eine gewünschte Formgebung zu erzeugen, zum anderen aber auch eine innige Verbindung der beiden Kunststoffe zu bewirken. Der Steckverbinder ist dabei als Zwei-Komponenten-Kunststoffteil, insbesondere als Spritzgußteil, ausgebildet.

Vorzugsweise ist der zweite Kunststoff als Siliconelastomer ausgebildet. Siliconelastomere haben sich für viele Anwendungen bewährt. Sie haben eine relativ glatte Oberfläche und können gut komprimiert werden.

Vorzugsweise bildet der zweite Kunststoff einen den Verbindungsstutzen in einem vorbestimmten Abstand zu seinem freien Ende umgebenden Anschlag. Ein derartiger Anschlag hat zwei Vorteile. Er bildet zum einen einen axialen Toleranzausgleich, wenn der Steckverbinder mit einem Gegenstück in Eingriff gebracht wird. Man ist also nicht länger darauf angewiesen, das Gegenstück und den Steckverbinder mit einer hohen Genauigkeit aufeinander abzustimmen. Vielmehr werden gewisse Toleranzen zugelassen. Darüber hinaus wirkt der Anschlag als stirnseitige Abdeckung des Gegenstücks. Zwar ist bei einer fertig hergestellten Steckkupplung immer eine Dichtung zwischen dem Anschlußstutzen und dem Gegenstück im Inneren des Gegenstücks oder auf der Außenseite des Anschlußstutzens vorhanden. Der umlaufende Anschluß ist aber eine zusätzliche stirnseitige Abdekkung, die beispielsweise ein Eindringen von Staub verhindern kann.

Vorzugsweise bildet der zweite Kunststoff einen den Verbindungsstutzen umgebenden Dichtring. Ein derartiger Dichtring ist dann ein Ersatz für einen Rundschnurdichtring oder O-Ring. Der zweite Kunststoff hat den Vorteil, daß er bereits nach dem Herstellen des Steckverbinders an Ort und Stelle vorliegt. Es entfällt also die Montage eines O-Ringes. Darüber hinaus kann man mit dem zweiten Kunststoff besser sicherstellen, daß die entsprechende Dichtung an der richtigen Position sitzt, so daß die Zuverlässigkeit des Steckverbinders beim Herstellen einer Steckkupplung steigt.

Vorzugsweise bildet der zweite Kunststoff Rippen, die in Axialrichtung vor und/oder hinter dem Dichtring angeordnet sind. Diese Rippen bilden dann eine "Taumelabstützung", d.h. sie stützen ein mit dem Steckverbinder verbundenes Gegenstück von innen gegen eine Kippbewegung ab. Darüber hinaus führen sie das Gegenstück beim Aufschieben auf den Verbindungsstutzen, bevor das Gegenstück mit der Dichtung in Kontakt kommt. Dadurch wird die Gefahr klein gehalten, daß die Dichtung bei der Montage beschädigt wird.

Vorzugsweise weisen die Rippen eine radiale Erstreckung auf, die kleiner als die radiale Erstreckung des Dichtringes ist. Damit wird gewährleistet, daß der Dichtring in ausreichendem Maße komprimiert werden kann, um die notwendige Dichtigkeit bei der Steckkupplung herzustellen. Der Dichtring hat, bezogen auf den Innendurchmesser des Gegenstücks, ein Übermaß, so daß das Gegenstück den Dichtring komprimiert. Auch die Rippen haben gegenüber dem Innendurchmesser des Gegenstücks ein Übermaß, wobei dieses Übermaß kleiner ist als das Übermaß des Dichtringes. Auch die Rippen werden daher komprimiert, wenn das Gegenstück aufgeschoben wird. Dies verbessert die Abstützung gegen Taumeln.

Vorzugsweise weist der Korpus einen Anschlußstutzen auf, der eine aus dem zweiten Kunststoff gebildete Dichtung trägt. Hier gilt im Grunde das Gleiche, wie für den Dichtring am Verbindungsstutzen. Man kann die Dichtung aus dem zweiten Kunststoff beim Herstellen des Korpus unmittelbar anspritzen, so daß man eine innige Verbindung zwischen der Dichtung und dem Korpus erhält und man sicher sein kann, daß die Dichtung an der richtigen Stelle plaziert ist.

Vorzugsweise ist der Dichtung benachbart eine Halterippenanordnung angeordnet, die mehrere, in Umfangsrichtung einen Abstand zueinander aufweisende Halterippen aufweist. Natürlich können zusätzlich noch eine oder mehrere umlaufende Halterippen vorgesehen sein. Die Unterbrechung mindestens eines Halterippenrings in Umfangsrichtung führt zu einer Verdrehsicherung, so daß ein auf den Anschlußstutzen aufgeschobenes Rohr oder ein aufgeschobener Schlauch gegenüber dem Anschlußstutzen nicht ohne weiteres verdreht werden kann. Wenn das Rohr, beispielsweise ein Polyamid-Rohr, gegenüber dem Anschlußstutzen nicht verdreht werden kann, dann entstehen auch keine Reibungsbewegungen zwischen dem Rohr und der Dichtung. Die Dichtung kann daher ihre Funktion über einen längeren Zeitraum zuverlässig erfüllen.

Hierbei ist bevorzugt, daß mindestens eine Halterippe Seitenflanken aufweist, die aufeinander zu geneigt sind. Dadurch entsteht an einem Ende der Halterippe in axialer Richtung, bezogen auf die axiale Erstreckung des Anschlußstutzens, eine spitze Kante, die sich in die Innenwand eines auf den Anschlußstutzen aufgeschobenen Rohres oder eines Schlauches einprägt, um die Verdrehsicherheit zu verbessern.

Auch ist von Vorteil, wenn mindestens eine Halterippe mindestens eine hinterschnittene Seitenflanke aufweist. Eine derartige Halterippe läßt sich beispielsweise dort anordnen, wo sich die Trennebene der Spritzgußform befindet. Auch die hinterschnittene Seitenflanke sorgt dafür, daß eine Ecke relativ spitz ausgeführt werden kann, so daß sich diese Ecke in der Innenwand einer auf den Anschlußstutzen aufgeschobenen Leitung verhaken kann, um die Verdrehsicherheit zu verbessern.

Vorzugsweise ist die Dichtung dichter am freien Ende des Anschlußstutzens angeordnet als die Halterippen. Damit können sich die Halterippen zwar in die Innenwand einer aufgeschobenen Leitung eingraben. Es besteht aber keine Gefahr, daß sie dabei die Innenwand der aufgeschobenen Leitung an einer Position beschädigen, an der die Dichtung angeordnet ist. Man ermöglicht damit, daß die Innenwand der aufgeschobenen Leitung im Bereich der Dichtung glatt bleibt und trotzdem eine Verdrehsicherung durch die in die Innenwand eingegrabenen Ecken und Kanten der Halterippen erfolgt.

Bevorzugterweise trägt der Anschlußstutzen einen Indikatorring, der aus dem zweiten Kunststoff gebildet ist. Damit ergibt sich eine Markierung, mit der man überprüfen kann, ob die auf den Anschlußstutzen aufgeschobene Leitung, die als Rohr oder Schlauch ausgebildet ist, "gerade" abgeschnitten worden ist. Der Indikatorring ist beispielsweise so angeordnet, daß er bei korrekt aufgeschobener Leitung nicht mehr sichtbar ist, und zwar in vollem Umfang. Wenn die Leitung nicht unter einem rechten Winkel zu ihrer Längserstreckung abgeschnitten worden ist, sondern eine geneigte oder schiefe Stirnseite aufweist, bleibt der Indikatorring teilweise sichtbar und der Monteur weiß, daß er die Leitung überarbeiten muß.

Vorzugsweise ist der Anschlußstutzen gegenüber dem Verbindungsstutzen abgewinkelt und der Korpus weist auf seiner dem Verbindungsstutzen gegenüber liegenden Stirnseite eine Druckfläche auf, die mit dem zweiten Kunststoff versehen ist. Eine derartige Druckfläche kann beispielsweise als Daumenauflage verwendet werden, wenn der Steckverbinder mit dem Gegenstück zusammengefügt werden muß. Bei dieser Bewegung ist eine gewisse Druckkraft erforderlich, die ein Monteur beispielsweise mit seinem Daumen aufbringen kann. Der zweite Kunststoff verbessert die Haptik, so daß der Monteur eher geeignet ist, den gewünschten Druck mit seinem Daumen aufzubringen.

Bevorzugterweise weist die Rastnase zumindest auf ihrer radialen Innenseite eine Schicht aus dem zweiten Kunststoff auf. Damit ist es möglich, die Montagekräfte zu vermindern. Wenn die Rastnase über den oben erwähnten Vorsprung am Gegenstück hinweg gleiten muß, entstehen Reibungskräfte, die herabgesetzt werden können, wenn der zweite Kunststoff an seiner Oberfläche glatt genug ist.

Auch ist von Vorteil, wenn die Halteeinrichtung einen mehrere Rastnasen miteinander verbindenden Ring aufweist, der zumindest in einem Griffbereich seiner Umfangsfläche mit dem zweiten Kunststoff versehen ist. Der Ring kann verwendet werden, um die Rastnasen so auseinander zu spreizen, daß der Vorsprung des Gegenstücks von den Rastnasen freikommt, so daß die Steckkupplung gelöst werden kann. Wenn man nun dort, wo man angreifen muß, um den Ring zusammenzudrücken und die Rastnase zu spreizen, den zweiten Kunststoff anordnet, dann wird die Haptik verbessert und der Monteur hat ein angenehmeres Gefühl, wenn er die Steckverbindung löst.

Hierbei ist bevorzugt, daß der zweite Kunststoff im Griffbereich eine in Umfangsrichtung verlaufende Wellung aufweist. Die Täler der Wellen verlaufen also in Umfangsrichtung. Dies hat den Vorteil, daß die Bruchgefahr des Ringes verringert wird. Fertigungstechnisch hat dies den Vorteil, daß die Rippen in Flußrichtung des Kunststoffs liegen, so daß die Fertigung vereinfacht wird.

Auch ist von Vorteil, wenn der Korpus eine Markierung aus dem zweiten Kunststoff aufweist. Der Korpus hat in der Regel relativ wenige Flächen, die so ausgebildet sind, daß man sie ohne weiteres bedrucken kann. Wenn man nun den zweiten Kunststoff verwendet, um die Markierung aufzubringen, dann kann man die Markierung bereits beim Herstellen des Korpus aufbringen, beispielsweise beim Spritzgießen. Um wechselnde Markierungen aufzubringen, ist es dann lediglich erforderlich, in der Spritzgußform einen anderen Schrifteinsatz oder Markierungseinsatz zu verwenden.

Die Erfindung wird im folgenden anhand eines bevorzugten Ausführungsbeispiels in Verbindung mit der Zeichnung näher beschrieben. Hierin zeigen:
- Fig. 1: eine Seitenansicht eines Steckverbinders,
- Fig. 2: eine Schnittansicht des Steckverbinders,
- Fig. 3: einen Schnitt III-III nach Fig. 2,
- Fig.4: eine Einzelheit IV nach Fig. 3 und
- Fig. 5: eine Schnittansicht V-V nach Fig. 3 in vergrößerter Darstellung.

Ein Steckverbinder 1 weist eine Korpus 2 auf mit einem Verbindungsstutzen 3, der zum Herstellung einer Steckkupplung in eine stirnseitige Öffnung eines nicht näher dargestellten Gegenstücks eingeschoben werden kann. Um das Gegenstück auf dem Verbindungsstutzen zu sichern, weist der Korpus 2 Rastnasen 4 auf, von denen jede an einem freien Ende eines Haltearmes 5 angeordnet ist. Dabei befinden sich die Rastnasen 4 radial außerhalb des Verbindungsstutzens 3 und weisen einen radialen Abstand zum Verbindungsstutzen 3 auf.

Die Rastnasen 4 sind durch einen Ring 6 miteinander verbunden. Der Ring 6 weist zwei einander gegenüberliegende Griffbereiche 7 auf. Wenn der Ring 6 an den Griffbereichen 7 zusammengedrückt wird, dann werden die Haltearme 4 radial nach außen gebogen. Dabei bewegen sich die Rastnasen 4 ebenfalls radial nach außen, so daß das Gegenstück, das mit einem Vorsprung hinter den Rastnasen 4 eingerastet ist, vom Verbindungsstutzen 3 freikommen kann.

Der Korpus weist ferner einen Anschlußstutzen 8 auf, der im vorliegenden Beispiel gegenüber dem Verbindungsstutzen 3 abgewinkelt ist und hier einen Winkel von etwa 90° mit dem Verbindungsstutzen einschließt. Der Anschlußstutzen 8 weist an seiner Umfangsfläche mehrere Halterippen 9 auf, die in Umfangsrichtung voneinander beabstandet sind. Ferner ist eine durchgehende Halterippe 10 vorgesehen, die dem freien Ende des Anschlußstutzens 8 benachbart ist. Zwischen den beabstandeten Halterippen 9 und der durchgehenden Halterippe 10 ist eine Dichtung 11 angeordnet. Eine derartige Ausgestaltung läßt sich auch bei einem nicht abgewinkelten Anschlußstutzen verwenden.

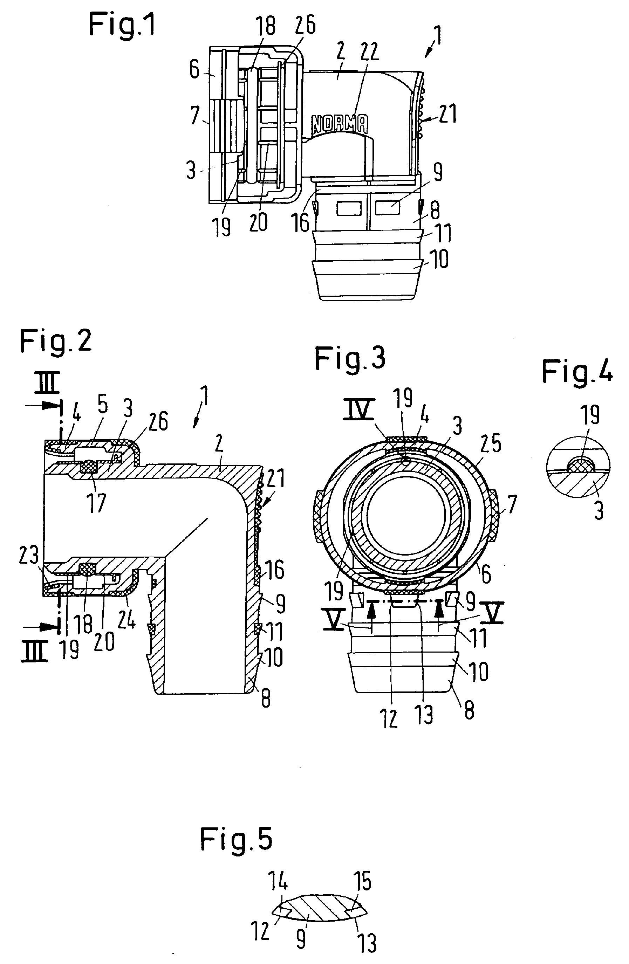

Aus Fig. 3 ist zu erkennen, daß mindestens eine Halterippe 9 Seitenflanken 12, 13 aufweist, die zum freien Ende des Anschlußstutzens 8 konvergieren, also aufeinander zulaufen. Wie aus Fig. 5 zu erkennen ist, sind die Seitenflanken 12, 13 hinterschnitten, d.h. sie weisen jeweils eine Hinterschneidung 14, 15 auf. Dadurch ergibt sich an den Ecken dieser Halterippe 9, die den größten Abstand zum freien Ende des Anschlußstutzens 8 aufweisen, jeweils eine relativ spitze Ecke, die sich in die Innenwand einer Leitung eingraben kann, die auf den Anschlußstutzen 8 aufgeschoben wird. Die Leitung kann als Rohr, insbesondere als Polyamid-Rohr, oder als Schlauch ausgebildet sein. Die Ausbildung der unterbrochenen Halterippen 9 bildet also eine Verdrehsicherung.

Der Anschlußstutzen 8 weist ferner an seinem dem freien Ende abgewandten Ende einen Indikatorring 16 auf, der bei auf den Anschlußstutzen 8 aufgeschobener Leitung vollständig abgedeckt sein sollte. Damit läßt sich auf einfache Weise kontrollieren, ob diese Leitung richtig abgeschnitten worden ist, nämlich senkrecht zu ihrer Achse. Wenn die Leitung eine schräge Stirnseite aufweist, dann ist ihr Indikatorring 16 nur auf einem Teil seines Umfangs abgedeckt. Sofern noch etwas von ihm sichtbar ist, muß die aufgeschobene Leitung entfernt und überarbeitet werden.

Dadurch, daß die unterbrochenen Halterippen 9 in Aufschieberichtung der Leitung hinter der Dichtung 11 angeordnet sind, können sie sich in die Innenwand der aufgeschobenen Leitung eingraben, ohne daß eine mit der Dichtung 11 zusammenwirkende Dichtfläche dieser Leitung beschädigt wird. Die Dichtung 11 erzeugt also dann eine hervorragende Dichtigkeit mit der Leitung.

Der Verbindungsstutzen 3 weist eine Nut 17 auf, in der ein Dichtring 18 angeordnet ist. Auf beiden Seiten des Dichtrings 18 in Axialrichtung des Verbindungsstutzens 3 sind Rippen 19, 20 angeordnet. Der Dichtring 18 überragt die Rippen 19, 20 geringfügig in radialer Richtung. Sowohl die Rippen 19, 20 als auch der Dichtring 18 sind mit einem gewissen Übermaß gegenüber dem Innendurchmesser des nicht näher dargestellten Gegenstücks gefertigt, so daß sowohl der Dichtring 18 komprimiert wird, um eine dichte Verbindung zwischen dem Verbindungsstutzen 3 und dem Gegenstück zu schaffen, als auch die Rippen 19, 20, um ein Kippen oder Taumeln des Gegenstücks gegenüber dem Verbindungsstutzen 3 zu verhindern.

Der Korpus 2 weist auf seiner dem Verbindungsstutzen 3 gegenüberliegenden Stirnseite eine Druckfläche 21 auf, die in den Indikatorring 16 übergeht.

Ferner weist der Korpus eine Markierung 22 auf, die beispielsweise durch einen Schriftzug gebildet sein kann.

Der Korpus 2 ist aus einem ersten Kunststoff gebildet. Ein Teil der oben beschriebenen Elemente sind aus einem zweiten Kunststoff gebildet, der beispielsweise als Siliconelastomer ausgebildet ist. Der zweite Kunststoff ist weicher als der erste Kunststoff und glatter. Er ist mit dem ersten Kunststoff zusammengespritzt, so daß der gesamte Steckverbinder 1 als Zwei-Komponenten-Spritzgußelement hergestellt werden kann.

Im Einzelnen ist der Dichtring 18 aus dem zweiten Kunststoff gebildet. Auch die Rippen 19, 20 sind aus dem zweiten Kunststoff gebildet. Die Dichtung 11 ist aus dem zweiten Kunststoff gebildet. Der Indikatorring 16 ist aus dem zweiten Kunststoff gebildet und geht in die Druckfläche 21 über, die ebenfalls aus dem zweiten Kunststoff gebildet ist. Der zweite Kunststoff hat eine bessere Haptik als der erste Kunststoff des Korpus 2.

Auch die Griffbereiche 7 am Ring 6 sind aus dem zweiten Kunststoff gebildet. Wie aus Fig. 1 zu erkennen ist, weisen die Griffbereiche 7 aus dem zweiten Kunststoff eine Wellung auf, bei der die Höhen und Tiefen parallel zur Umfangsrichtung verlaufen. Damit wird die Bruchgefahr, die sich durch axial verlaufende Wellungen und eine damit verbundene Kerbwirkung ergeben könnte, verringert.

Auch die Rastnasen 4 weisen an ihrer radialen Innenseite eine Kunststoffschicht 23 aus dem zweiten Kunststoff auf. Da der zweite Kunststoff glatter ist als der erste Kunststoff, wird ein Aufschieben und ein damit verbundenes Aufspreizen der Rastnasen 4 auf das Gegenstück erleichtert. Wenn dort weniger Reibungskräfte entstehen, dann ist auch die zum Aufschieben erforderliche Kraft geringer und damit die Montagekraft. Die Kunststoffschicht 23 setzt sich radial außen um die Haltearme mit einer Abdeckung 24 fort, wobei die Abdeckung hauptsächlich optische Gründe hat. Auch der Ring 6 ist mit einer Beschichtung 25 aus dem zweiten Kunststoff versehen, um ein gefälligeres Aussehen zu schaffen.

Der zweite Kunststoff weist in vorteilhafter Weise eine andere Einfärbung als der erste Kunststoff des Korpus 2 auf. Dementsprechend ist die Markierung 22 gut sichtbar. Die Markierung 22 kann durch einen Schrift- oder Markierungseinsatz in der Spritzgußform erzeugt werden. Wenn eine andere Markierung gewünscht ist, reicht es aus, den Schrift- oder Markierungseinsatz zu wechseln.

Der Verbindungsstutzen 3 ist ferner mit einem umlaufenden Anschlag 26 versehen, der ebenfalls aus dem zweiten Kunststoff gebildet ist. Der Anschlag 26 kann auch einstückig mit den Rippen 20 ausgebildet sein, um seine Befestigung am Verbindungsstutzen 3 zu verbessern. Der Anschlag 26 ist elastisch nachgiebig. Wenn ein Gegenstück auf den Verbindungsstutzen 3 aufgeschoben wird, dann dient der Anschlag 26 zum axialen Toleranzausgleich. Darüber hinaus dichtet er einen stirnseitigen Spalt, der zwischen dem Verbindungsstutzen 3 und dem Gegenstück entstehen könnte, ab, um beispielsweise ein Eindringen von Staub zu vermeiden.

## Patentansprüche

1. Steckverbinder mit einem Korpus aus einem ersten Kunststoff, der einen Verbindungsstutzen und mindestens eine Rastnase aufweist, die an einem Halteelement radial außerhalb des Verbindungsstutzens und mit radialem Abstand zum Verbindungsstutzen angeordnet ist, **dadurch gekennzeichnet, daß** der Korpus (2) zumindest auf einem Teil seiner Oberfläche mit einem zweiten Kunststoff versehen ist.

2. Steckverbinder nach Anspruch 1, **dadurch gekennzeichnet, daß** der zweite Kunststoff weicher als der erste Kunststoff ist.

3. Steckverbinder nach Anspruch 1 oder 2, **dadurch gekennzeichnet, daß** der zweite Kunststoff glatter als der erste Kunststoff ist.

4. Steckverbinder nach einem der Ansprüche 1 bis 3, **dadurch gekennzeichnet, daß** der erste Kunststoff und der zweite Kunststoff aneinander angespritzt sind.

5. Steckverbinder nach einem der Ansprüche 1 bis 4, **dadurch gekennzeichnet, daß** der zweite Kunststoff als Siliconelastomer ausgebildet ist.

6. Steckverbinder nach einem der Ansprüche 1 bis 5, **dadurch gekennzeichnet, daß** der zweite Kunststoff einen den Verbindungsstutzen (3) in einem vorbestimmten Abstand zu seinem freien Ende umgebenden Anschlag (26) bildet.

7. Steckverbinder nach einem der Ansprüche 1 bis 6, **dadurch gekennzeichnet, daß** der Kunststoff einen den Verbindungsstutzen (3) umgebenden Dichtring (18) bildet.

8. Steckverbinder nach Anspruch 7, **dadurch gekennzeichnet, daß** der zweite Kunststoff Rippen (19, 20) bildet, die in Axialrichtung vor und/oder hinter dem Dichtring (18) angeordnet sind.

9. Steckverbinder nach Anspruch 8, **dadurch gekennzeichnet, daß** die Rippen (19, 20) eine radiale Erstreckung aufweisen, die kleiner als die radiale Erstreckung des Dichtrings (18) ist.

10. Steckverbinder nach einem der Ansprüche 1 bis 9, **dadurch gekennzeichnet, daß** der Korpus (2) einen Anschlußstutzen (8) aufweist, der eine aus dem zweiten Kunststoff gebildete Dichtung (11) trägt.

11. Steckverbinder nach Anspruch 10, **dadurch gekennzeichnet, daß** der Dichtung (11) benachbart einer Halterippenanordnung angeordnet ist, die mehrere in Umfangsrichtung einen Abstand zueinander aufweisende Halterippen (9) aufweist.

12. Steckverbinder nach Anspruch 11, **dadurch gekennzeichnet, daß** mindestens eine Halterippe (9) Seitenflanken (12, 13) aufweist, die aufeinander zu geneigt sind.

13. Steckverbinder nach einem der Ansprüche 10 bis 12, **dadurch gekennzeichnet, daß** mindestens eine Halterippe (9) mindestens eine hinterschnittene Seitenflanke (12, 13) aufweist.

14. Steckverbinder nach einem der Ansprüche 10 bis 13, **dadurch gekennzeichnet, daß** die Dichtung (11) dichter am freien Ende des Anschlußstutzens (8) angeordnet ist als die Halterippen (9).

15. Steckverbinder nach einem der Ansprüche 10 bis 14, **dadurch gekennzeichnet, daß** der Anschlußstutzen (8) einen Indikatorring (16) trägt, der aus dem zweiten Kunststoff gebildet ist.

16. Steckverbinder nach einem der Ansprüche 10 bis 15, **dadurch gekennzeichnet, daß** der Anschlußstutzen (8) gegenüber dem Verbindungsstutzen (3) abgewinkelt ist und der Korpus (2) auf seiner dem Verbindungsstutzen (3) gegenüberliegenden Stirnseite eine Druckfläche (21) aufweist, die mit dem zweiten Kunststoff versehen ist.

17. Steckverbinder nach einem der Ansprüche 1 bis 16, **dadurch gekennzeichnet, daß** die Rastnase (4) zumindest auf ihrer radialen Innenseite eine Schicht aus dem zweiten Kunststoff aufweist.

18. Steckverbinder nach einem der Ansprüche 1 bis 17, **dadurch gekennzeichnet, daß** die Halteeinrichtung (5) einen mehrere Rastnasen (4) miteinander verbindenden Ring (6) aufweist, der zumindest in einem Griffbereich (7) seiner Umfangsfläche mit dem zweiten Kunststoff versehen ist.

19. Steckverbinder nach Anspruch 18, **dadurch gekennzeichnet, daß** der zweite Kunststoff im Griffbereich (7) eine in Umfangsrichtung verlaufende Wellung aufweist.

20. Steckverbinder nach einem der Ansprüche 1 bis 19, **dadurch gekennzeichnet, daß** der Korpus (2) eine Markierung (22) aus dem zweiten Kunststoff aufweist.
